## Europäisches Patentamt
## European Patent Office
## Office européen des brevets

(19)

(11) Veröffentlichungsnummer: **0 157 290 B1**

(12) # EUROPÄISCHE PATENTSCHRIFT

(45) Veröffentlichungstag der Patentschrift: **04.03.92**

(51) Int. Cl.⁵: **A23G 1/26,** A23G 1/28, A23G 7/02

(21) Anmeldenummer: **85103215.1**

(22) Anmeldetag: **20.03.85**

(54) **Anlage zum Herstellen von Schokoladenartikeln.**

(30) Priorität: **30.03.84 DE 3411814**

(43) Veröffentlichungstag der Anmeldung:
**09.10.85 Patentblatt 85/41**

(45) Bekanntmachung des Hinweises auf die
Patenterteilung:
**04.03.92 Patentblatt 92/10**

(84) Benannte Vertragsstaaten:
**AT BE CH DE FR GB IT LI LU NL SE**

(56) Entgegenhaltungen:

| | |
|---|---|
| CH-A- 85 558 | DE-A- 2 322 918 |
| DE-A- 2 425 098 | DE-C- 396 193 |
| FR-A- 437 845 | FR-A- 1 389 058 |
| GB-A- 951 793 | GB-A- 970 862 |
| GB-A- 974 824 | GB-A- 1 152 222 |
| GB-A- 2 131 936 | US-A- 1 478 866 |
| US-A- 1 753 828 | US-A- 2 307 562 |
| US-A- 2 460 150 | US-A- 2 701 071 |
| US-A- 3 768 553 | |

(73) Patentinhaber: **Gebr. Bindler Maschinenfabrik
GmbH & Co. KG
Kölner Strasse 102-106
W-5275 Bergneustadt/Rhld.1(DE)**

(72) Erfinder: **Bindler, U., Dipl.-Ing.
Wilhelmstrasse 47
W-5275 Bergneustadt(DE)**
Erfinder: **Bender, Hans-Jürgen, Dipl.-Ing.
Am Gallenberg
W-5960 Olpe(DE)**

(74) Vertreter: **Patentanwaltsbüro Cohausz & Florack
Schumannstrasse 97
W-4000 Düsseldorf 1(DE)**

EP 0 157 290 B1

## Beschreibung

Die Erfindung betrifft eine Anlage zum Herstellen von geformten Schokoladen-Artikeln, mit einzelnen Arbeitsstationen wie einer Gieß-, Wende- und Kühlstation und mit einer zum Transport der Formen zwischen den Arbeitsstationen dienenden Transportbahn.

Im allgemeinen werden bei derartigen Anlagen die Formen auf einer Transportbahn befördert, die mit Mitnehmern versehene Transportketten hat. Die Mitnehmer greifen jeweils an der Rückseite einer Form an, wobei die einzelnen Formen jeweils einen durch den Abstand der Mitnehmer voneinander bestimmten Abstand haben.

Unter bestimmten Voraussetzungen ist diese Art des Formentransports ungünstig. Wenn beispielsweise innerhalb einer Kühlstation bewegte Antriebselemente wie Transportketten vorhanden sein müssen, so erschweren diese die Gewährleistung der hygienischen Voraussetzungen. Es ist verhältnismäßig aufwendig und schwierig, die Kühlstation in ausreichendem Maße sauberzuhalten.

Da die Formen nach dem Füllen eine vorgegebene zeitlang gekühlt werden müssen, ist es erforderlich, die Formen entsprechend dem Arbeitstakt der Anlage über einen verhältnismäßig langen Transportweg durch die Kühlstation zu führen. Um den hierzu notwendigen Raumbedarf nicht allzu groß werden zu lassen, hat man Kühlstationen mit einer oder mehreren Paternoster-Anlagen versehen. In diesen werden die Formen teilweise auch in vertikaler Richtung, gegebenenfalls auch in mehreren Bahnen übereinander, geführt. Der zuvor genannte und in der Verwendung von Transportketten bestehende Nachteil gilt hier in besonderem Maße.

Aus der FR-1389058 ist eine Vorrichtung bekannt, bei der dieser Nachteil dadurch beseitigt worden ist, daß die Formen aneinanderliegend auf Transportbahnen durch eine Kühlanlage schiebbar sind.

Es ist ferner aber auch nachteilig, daß sich die Kühlluft innerhalb einer derartig ausgebildeten Kühlstation nicht oder nur mit sehr viel Aufwand in kontrollierter Weise an den Formen entlangführen läßt. Im allgemeinen verläuft die Kühlluftströmung verhältnismäßig unkontrolliert beziehungsweise unkontrollierbar, da die für eine kontrollierte Luftströmung erforderlichen Leit- und Führungselemente nicht vorhanden sind oder aufgrund der Konstruktion einer Paternoster-Anlage nicht vorhanden sein können. Hierdurch wird unter anderem auch der Wirkungsgrad der Kühlstation nachteilig beeinflußt.

Hiervon ausgehend war es Aufgabe der vorliegenden Erfindung, eine Anlage der eingangs genannten Art so zu verbessern, daß eine Vereinfachung des Formentransports und gleichzeitig eine kontrollierte Führung des Kühlluftstromes innerhalb einer Kühlstation gewährleistet sind.

Zur Lösung dieser Aufgabe wird erfindungsgemäß vorgeschlagen, daß bei einer Anlage, durch die die Kühlstation durchlaufenden Formen aneinanderliegend durch Schub transportiert wenden die aneinanderliegenden Formen zur Leitung der Kühlluft dienen, die in der Kühlstation längs der Transportbahn strömt.

Diese Art des Formentransports hat insbesondere innerhalb einer Kühlstation wesentliche Vorteile. Durch das Aneinanderliegen der Formen wird der je Form erforderliche Platzbedarf auf ein Miniumum verringert. Wenn die Formen aneinanderliegend durch die Kühlstation hindurchgeschoben werden, können bewegliche Transportelemente innerhalb derselben entfallen. Die hygienischen Voraussetzungen lassen sich deshalb viel leichter erfüllen, abgesehen davon, daß sich der technische Aufwand merkbar verringert.

Von besonderem Vorteil ist, daß die aneinanderliegenden Formen selbst als Leitfläche für die Führung des Kühlluftstromes dienen können. So kann der Kühlluftstrom beispielsweise unmittelbar an der Unterseite und an der Oberseite der Formen entlanggeführt werden, und zwar jeweils in Form einer über eine längere Strecke hin nicht verzweigenden Strömung. Es läßt sich eine viel intensivere und gleichmäßigere Kühlung erreichen. Die Verbesserung des Kühl-Wirkungsgrades und die gleichzeitige Platzersparnis durch das unmittelbare Aneinanderliegen der Formen machen es möglich, die Formen innerhalb der Kühlstation durchgehend innerhalb einer einheitlichen Ebene zu transportieren, ohne daß die Kühlstation hierbei unzulässig groß wird.

Nachfolgend werden einige vorteilhafte Ausgestaltungen der Erfindung näher beschrieben, von denen eine darin besteht, daß die Kühlluft an der Unterseite und der Oberseite der Formen jeweils in einer zur Transportrichtung parallelen Richtung entlanggeleitet wird. Hierbei kann die Kühlluft jeweils über eine verhältnismäßig lange Strecke hin ohne Umlenkung unmittelbar an den Formen entlanggeführt werden, wobei es im allgemeinen zweckmäßig sein wird, die Kühlluft an der Oberseite der Formen in der zur Transportrichtung entgegengesetzten Richtung zu führen. Die Kühlluft kann im Eingangsbereich und/oder im Ausgangsbereich der Kühlstation von der Unterseite zur Oberseite der Formen oder in umgekehrter Richtung entsprechend umgelenkt werden.

Erfindungsgemäß ist es ferner vorteilhaft, wenn die Kühlstation ein Gehäuse aufweist, dessen Breite größer ist als die Breite der Formen, wenn die Umlenkung der Kühlluft in Eckbereichen des Gehäuses erfolgt und wenn der jeweils zwischen den Eckbereichen zu einer Seite der Transportbahn verlaufende Bereich zwischen den Formen und dem Gehäuse abgedichtet ist. Auf diese Weise werden am Eingang und am Ausgang der Kühlstation jeweils zwei Eckbereiche gebildet, in denen innerhalb des Gehäuses die Luftumlenkung von der Oberseite zur Unterseite der Formen oder in umgekehrter Richtung erfolgt. Die Abdichtung zwischen den zu einer Seite der Transportbahn jeweils verlaufenden Eckbereichen verhindert eine ungewünschte Vermischung der Luftsrömungen auf ihrem Wege zwischen dem Eingangs- und dem Ausgangsbereich.

Eine besonders zweckmäßige Bauweise der Kühlstation läßt sich erfindungsgemäß erreichen, wenn die Kühlluft etwa auf halber Länge der Kühlstation an der Unterseite der Formen zugeführt und von dort an der Unterseite der Formen entlang in Richtung auf den Eingang oder auf den Ausgang der Kühlstation geleitet wird und wenn am Eingang beziehungsweise am Ausgang die Kühlluft auf die Oberseite der Formen umgelenkt wird und an diesen bis zum Eingang beziehungsweise Ausgang entlangströmt, wo wiederum eine Umlenkung und Rückführung der Kühlluft an der Unterseite der Formen entlang erfolgt. Dies ermöglicht die Anordnung der zur Erzeugung des Kühlluftstromens notwendigen Gebläse und eines zur Rückkühlung der Kühlluft dienenden Wärmetauschers unterhalb der Transportbahn in der Kühlstatation, so daß sich eine gute Raumausnutzung ergibt.

Der maschinelle Betrieb derartiger Anlagen macht es notwendig, die Formen in einem Kreislauf zu führen.

Ein solcher Kreislauf läßt sich platzsparend besonders dann verwirklichen, wenn die Transportbahn in Teilbahnen unterteilt ist, die als Längsbahnen und zu diesen zumindest angenähert rechtwinklig verlaufenden Querbahnen angeordnet sind. Dabei ist es vorteilhaft, wenn eine Kühlstation jeweils im Verlauf einer Querbahn angeordnet ist.

Es ergeben sich dann auch für die übrigen Arbeitstationen vorteilhafte Anordnungsmöglichkeiten derart, daß die Formen hinter der Gießstation von einer Längsbahn auf eine Querbahn übergeben werden und daß auch eine Wende- und Ausschlagstation im Verlauf einer Querbahn angeordnet werden kann. Eine derartige Konstruktion ergibt eine Anlage, die ein etwa rechteckförmigen Aufbau hat und deren Arbeitsstationen jeweils von den Außenseiten her gut zugänglich sind.

Wenn die Formen auf den Längsbahnen der Anlage unter Anwendung von Transportketten geführt werden und wenn die Formen auf den Querbahnen aneinanderliegend durch Schub weitertransportiert werden, so kommt es unter anderem auch darauf an, ein ausreichend schnelles und zuverlässiges Übergeben der Formen zwischen den Längs- und Querbahnen zu gewährleisten. Hierbei können sich Schwierigkeiten gerade im inneren Eckbereich zwischen einer Längsbahn und einer Querbahn ergeben, wenn wie bisher zu beiden Seiten einer Längsbahn jeweils eine mit Mitnehmern versehene Transportkette vorhanden ist. Die Schwierigkeiten lassen sich gemäß einem weiteren Vorschlag der Erfindung dadurch vermeiden, daß die Formen an derjenigen Seite einer Längsbahn, an der eine Querbahn anschließt, an einer in Transportrichtung verlaufenden Anschlagleiste anliegen, während eine Transportkette nur an der gegenüberliegenden Seite einer Längsbahn vorgesehen ist.

Es ist also an der Innenseite einer Längsbahn eine Transportkette nicht mehr vorhanden, so daß die Formen bei der Übergabe zwischen einer Längsbahn und einer Querbahn beziehungsweise einer Querbahn und einer Längsbahn nicht mehr den Weg einer Transportkette kreuzen müssen. Dies erleichtert die Übergabe. Da jetzt nur eine Transportkette je Längsbahn benötigt wird, ist auch der technische Aufwand entsprechend geringer.

In diesem Zusammenhang kann es erfindungsgemäß ferner vorteilhaft sein, wenn an der Transportkette seitlich hervorstehende Anschläge befestigt sind, die an der zu der Transportrichtung parallelen Seite der Form angreifen. Diese Anschläge dienen als zusätzliche Sicherung der Formenführung insbesondere im Übergabebereich zwischen benachbarten Bahnen.

Ein Transportsystem, das in der von der Erfindung vorgeschlagenen Art aus Längs- und Querbahnen aufgebaut ist, ist auch unabhängig von der speziellen Ausbildung einer Kühlstation für eine den Merkmalen des Oberbegriffs entsprechende Anlage mit Vorteil für viele andere Zwecke anwendbar.

Nachfolgend wird eine bevorzugte Ausführungsform der Erfindung anhand einer Zeichnung näher beschrieben. Im einzelnen zeigen:

| Figur 1 | in perspektivischer Darstellung eine Kühlstation; |
|---|---|
| Figur 2 | einen Längsschnitt durch die Kühlstation nach Figur 1; |
| Figur 3 | einen in einer horizontalen Ebene liegenden Schnitt durch die Kühlstation nach Figur 1; |
| Figur 4 | in schematischer Darstellung die Draufsicht auf eine vollständige Anlage; |
| Figur 5 | einen Querschnitt durch eine Längsbahn. |

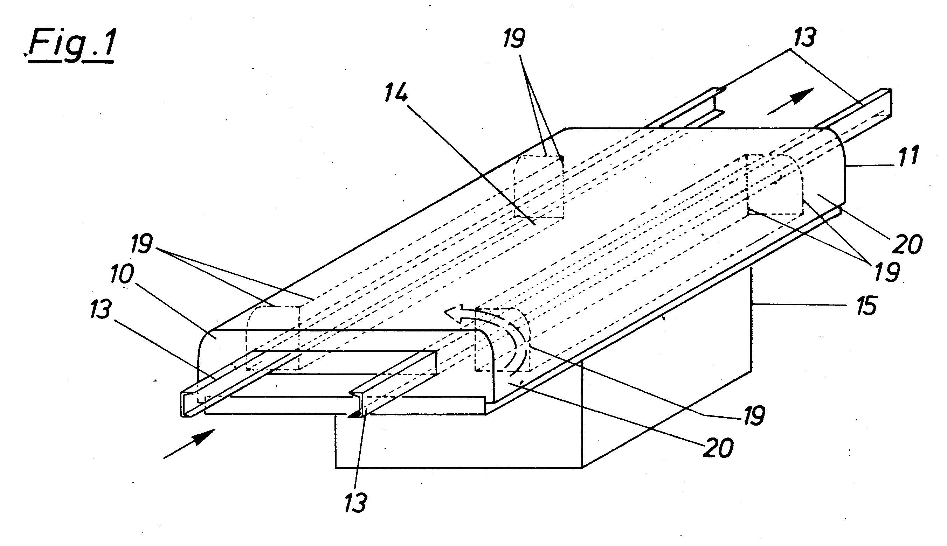

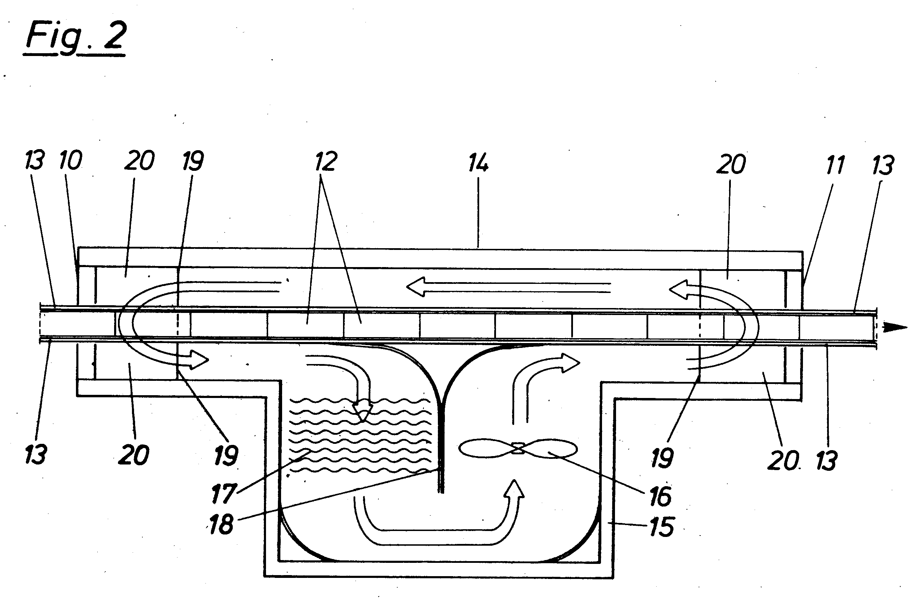

Zunächst soll der Aufbau einer Kühlstation anhand der Figuren 1 bis 3 beschrieben werden. Die Kühlstation hat einen Eingang 10 und einen Ausgang 11. Zwischen diesen werden Formen 12 aneinanderliegend im Arbeitstakt hindurchgeschoben, wobei die Formen 12 in U-förmigen Führungsschienen 13 gleiten. Die Kühlstation hat ein Gehäuse 14 und ruht auf einem Sockel 15, in dem drei Gebläse 16 und ein Wärmetauscher 17 angeordnet sind. Letzterer ist ein Verdampfer, in welchem die erwärmte Kühlluft rückgekühlt wird. Die rückgekühlte Kühlluft wird von den Gebläsen 16 angesaugt und mit Hilfe eines Leitelementes 18 so geführt, daß sie etwa auf halber Länge der Kühlstation unmittelbar mit der Unterseite der Formen 12 in Berührung kommt und an dieser entlangströmt. Im Bereich des Ausgangs 11 erfolgt eine Umlenkung zur Oberseite der Formen 12, an der die Kühlluft in einer zur Transportrichtung entgegengesetzten Richtung bis in die Nähe des Einganges 10 entlangströmt. Nach erneuter Umlenkung zur Unterseite der Formen 12 strömt die Kühlluft an der Unterseite entlang bis zu dem Leitelement 18 zurück, um dann in den Wärmetauscher 17 zu gelangen.

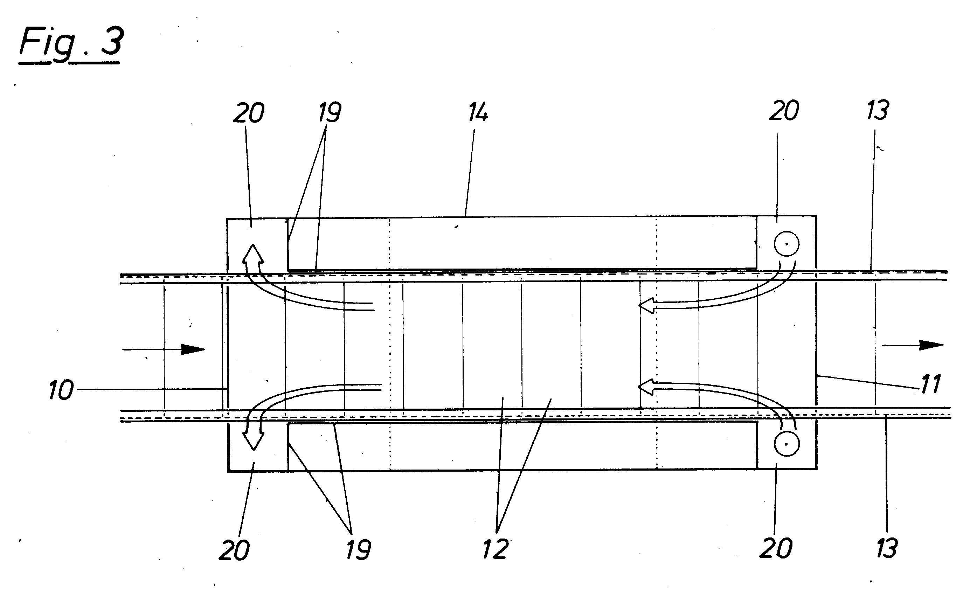

Wie Figur 3 erkennen läßt, ist das Gehäuse 14 so breit, daß zwischen den Führungsschienen 13 beziehungsweise den Formen 12 einerseits und der Wandung des Gehäuses 14 andererseits ein Freiraum verbleibt. Dieser ist zu beiden Seiten der Formen 12 jeweils durch ein Führungselement 19 im wesentlichen abgedichtet. Nur der eigentliche Eckbereich ermöglicht einen Durchgang der Kühlluft zwischen der Unterseite und der Oberseite der Formen 12, die aufgrund ihres Aneinanderliegens die beiden seitlichen Führungselemente 19 so verbinden, daß die Kühlluftströmung zwischen dem Eingang 10 und dem Ausgang 11 nicht oder allenfalls nur in sehr unwesentlichem Maße von der Oberseite der Formen 12 zur Unterseite oder umgekehrt strömen kann.

Die beiden Führungselemente 19 sind gemäß der Darstellung nach Figur 3 U-förmig derart, daß ein mittlerer Teil eine unmittelbar neben den Formen 12 verlaufende vertikale Wandung bildet, die den Kühlluftstrom von der Seite her unmittelbar auf den Bereich der Formen 12 begrenzt und die an den beiden Seiten rechtwinklig in Richtung auf das Gehäuse 14 abgebogen ist, um mit diesem abgewinkelten Teil einen zum Durchtreten des Kühlluftstromes dienenden Bereich von etwa rechteckförmigem Querschnitt zu begrenzen. Auf diese Weise werden vier Eckbereiche 20 gebildet. Die in diese eingezeichneten Pfeilsymbole bezeichnen die jeweilige Durchtrittsrichtung der Kühlluftströmung.

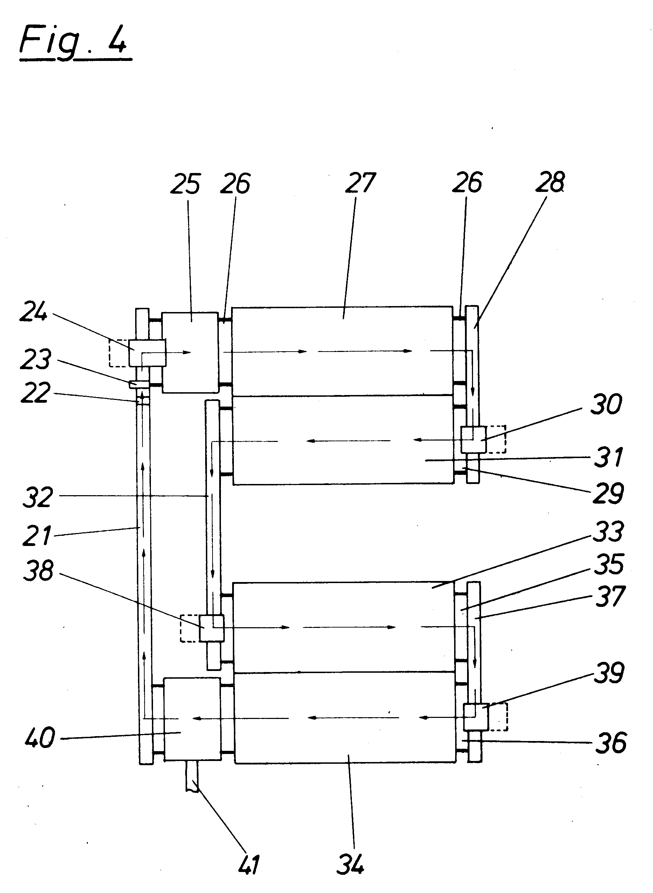

Figur 4 zeigt die Anordnung dieser Kühlstation innerhalb einer Anlage. Diese hat eine erste Längsbahn 21, in deren Verlauf eine zum Anwärmen der Formen 12 dienende Arbeitsstation 22 und eine Gießstation 23 angeordnet sind. Im Anschluß an diese werden die Formen 12 mit einer Vorschubeinrichtung 24 einer Arbeitsstation 25 zugeführt. Diese enthält zumindest einen Rüttler, um die flüssige Schokolade entgasen zu können. Die Arbeitsstation 25 kann aber zusätzlich auch als sogenannter Hülsenbilder ausgeführt sein, so daß in der Arbeitsstation 25 auch Hohlkörper aus Schokolade hergestellt werden können.

Die Arbeitsstation 25 ist in einer an die erste Längsbahn 21 rechtwinklig anschließenden Querbahn 26 angeordnet. Die zuvor beschriebene Kühlstation ist mit der Bezugsziffer 27 bezeichnet und befindet sich ebenfalls im Verlauf dieser Querbahn 26. Die Formen 12 werden auf der Querbahn 26 aneinanderliegend weiterbewegt, wobei die Vorschubeinrichtung 24 beispielsweise ein Stempel ist, der jeweils an der letzten der auf der Querbann 26 befindlichen Formen angreift und die Formenreihe im Arbeitstakt weiterdrückt.

Hinter der Kühlstation 27 schließt an die Querbahn 26 eine weitere Längsbahn 28 an, mittels derer die Formen 12 zu einer zur Querbahn 26 parallelen Querbahn 29 transportiert werden. Die Übergabe der Formen 12 auf die Querbahn 29 erfolgt mit Hilfe einer weiteren Vorschubeinrichtung 30.

Die Querbahn 29 durchsetzt eine nächste Kühlstation 31. Hinter dieser werden die Formen 12 auf eine nächste Längsbahn 32 übergeben. Im weiteren Verlauf gelangen die Formen 12 noch durch zwei weitere Kühlstationen 33 und 34, von denen jede ebenfalls von einer Querbahn 35 beziehungsweise 36 durchsetzt wird. Die Querbahnen 35 und 36 sind durch eine Längsbahn 37 verbunden. Zur Übergabe der Formen 12 dienen jeweils Vorschubeinrichtungen 38 und 39.

An die Kühlstation 34 schließt eine Arbeitsstation 40 an, die ebenfalls noch im Verlauf der Querbahn 36 liegt und die als Wende- und Ausschlageinrichtung ausgebildet ist.

Die in der Arbeitsstation 40 aus den Formen 12 ausgeschlagenen Schokoladen-Artikel werden mittels eines Austragbandes 41 abtransportiert, während die Formen 12 auf den Anfang der Längsbahn 21 zurückgegeben werden. Der Formenkreislauf ist somit geschlossen. Gegebenenfalls kann noch eine hier nicht dargestellte Arbeitsstation vorgesehen werden, die zum Reinigen der Formen 12 dient.

Auf allen Querbahnen 26, 29, 35 und 36 werden also die Formen 12 aneinanderliegend geführt, wobei sie jeweils in Führungsschienen in gleicher Weise wie in den Führungsschienen 13 der Kühlstation 27 gleiten und der Transport durch die jeweilige Vorschubeinrichtung 24, 30, 38 und 39 bewirkt wird.

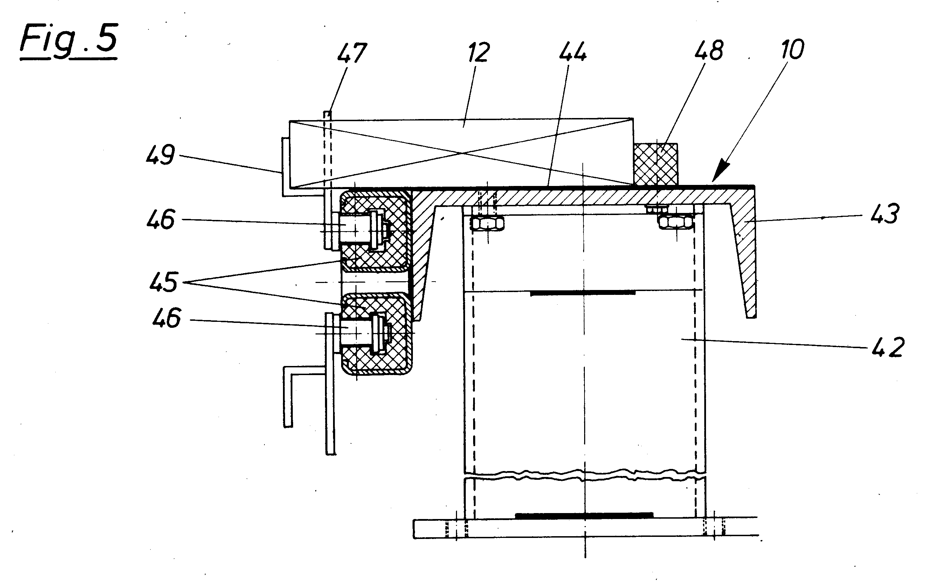

Figur 5 zeigt einen Querschnitt durch die Längsbahn 21. Die Längsbahnen 28, 32 und 37 sind gleichermaßen aufgebaut.

Die Längsbahn 21 hat einen von einem Gestell 42 getragenen Tisch 43, der an seiner Oberseite mit einem Gleitbelag 44 versehen ist. An der in Figur 5 linken Seite des Tisches 43 sind zueinander parallele Führungen 45 befestigt, in denen der obere beziehungsweise untere Trum einer Transportkette 46 geführt sind. In vorgegebenen Abständen zueinander sind an der Transportkette 46 Mitnehmer 47 befestigt, von denen jeweils einer an der Rückseite einer Form 12 angreift. Während jeweils ein Mitnehmer 47 den Vorschub einer Form 12 bewirkt, ist letztere an ihrer einen Längsseite durch eine Anschlagleiste 48 geführt. An der anderen Längsseite liegt ein mit der Transportkette 46 verbundener seitlicher Anschlag 49 an, der Z-förmig ausgebildet und an dem Mitnehmer 47 angeschweißt ist. Der Anschlag 49 dient als zusätzliche Sicherung der Formen 12 insbesondere im Übergabebereich zwischen benachbarten Bändern. Im übrigen wirkt der Anschlag 49 auch dem Verkanten einer Form 12 entgegen.

Die Anschlagleiste 48 endet jeweils dort, wo eine Querbahn anschließt, so daß jeweils auf der Anschlußseite einer Längsbahn irgendwelche Mitnehmer, Führungen oder dergleichen nicht stören.

**Bezugsziffernliste:**

| | |
|---|---|
| 10 | Eingang |
| 11 | Ausgang |
| 12 | Form |
| 13 | Führungsschiene |
| 14 | Gehäuse |
| 15 | Sockel |
| 16 | Gebläse |
| 17 | Wärmetauscher |
| 18 | Leitelement |
| 19 | Führungselement |
| 20 | Eckbereich |
| 21 | Längsbahn |
| 22 | Arbeitsstation |
| 23 | Gießstation |
| 24 | Vorschubeinrichtung |
| 25 | Arbeitsstation |
| 26 | Querbahn |
| 27 | Kühlstation |
| 28 | Längsbahn |
| 29 | Querbahn |
| 30 | Vorschubeinrichtung |
| 31 | Kühlstation |
| 32 | Längsbahn |
| 33 | Kühlstation |
| 34 | Kühlstation |
| 35 | Querbahn |
| 36 | Querbahn |
| 37 | Längsbahn |
| 38 | Vorschubeinrichtung |
| 39 | Vorschubeinrichtung |
| 40 | Arbeitsstation |
| 41 | Austragband |
| 42 | Gestell |
| 43 | Tisch |
| 44 | Gleitbelag |
| 45 | Führung |
| 46 | Transportkette |
| 47 | Mitnehmer |
| 48 | Anschlagleiste |
| 49 | Anschlag |

**Patentansprüche**

1. Anlage zum Herstellen von geformten Schokoladen-Artikeln, mit einzelnen Arbeitsstationen wie einer Gieß-, Wende- und Kühlstation und mit einer Transportbahn, auf der Formen (12) für die Schokoladen-Artikel aneinanderliegend durch die Arbeitsstationen schiebbar sind,
   **dadurch gekennzeichnet,** daß die aneinanderliegenden Formen (12) zur Leitung der Kühlluft dienen, die in der Kühlstation längs der Transportbahn strömt.

2. Anlage nach Anspruch 1,
   **dadurch gekennzeichnet,** daß die Kühlluft an der Unterseite und der Oberseite der Formen (12) jeweils in einer zur Transportrichtung parallelen Richtung entlanggeführt wird.

3. Anlage nach Anspruch 1 oder 2,
   **dadurch gekennzeichnet,** daß die Kühlluft im Eingangsbereich und/oder im Ausgangsbereich der Kühlstation (27,31,33,34) von der Unterseite zur Oberseite der Formen (12) oder in umgekehrter Richtung umgelenkt wird.

4. Anlage nach Anspruch 3,
   **dadurch gekennzeichnet,** daß die Kühlstation (27,31,33,34) ein Gehäuse (14) aufweist, dessen Breite größer ist als die Breite der Formen (12), daß die Umlenkung der Kühlluft in Eckbereichen (20) des Gehäuses (14) erfolgt und daß der jeweils zwischen den Eckbereichen (20) zu einer Seite der Transportbahn verlaufende Bereich zwischen den Formen (12) und dem Gehäuse (14) abgedichtet ist.

5. Anlage nach Anspruch 3 oder 4,
   **dadurch gekennzeichnet,** daß die Kühlluft etwa auf halber Länge der Kühlstation (27,31,33,34) an der Unterseite der Formen (12) zugeführt und von dort an der Unterseite der Formen (12) entlang in Richtung auf den Eingang (10) oder auf den Ausgang (11) der Kühlstation geleitet wird und daß am Eingang (10) beziehungsweise am Ausgang (11) die Kühlluft auf die Oberseite der Formen (12) umgelenkt wird und an dieser Seite bis zum Eingang (10) beziehungsweise Ausgang (11) entlangströmt, wo wiederum eine Umlenkung und Rückführung der Kühlluft an der Unterseite der Formen (12) entlang erfolgt.

6. Anlage nach einem der vorhergehenden Ansprüche,
dadurch gekennzeichnet, daß die Förderbahn in Teilbahnen unterteilt ist, die als Längsbahnen (21,28,32,37) und zu diesen zumindest angenähert rechtwinklig verlaufende Querbahnen (26,29,35,36) angeordnet sind.

7. Anlage nach Anspruch 6,
dadurch gekennzeichnet, daß eine Kühlstation (27,31,33,34) jeweils im Verlauf der Querbahn angeordnet ist.

8. Anlage nach Anspruch 6 oder 7,
dadurch gekennzeichnet, daß die Formen (12) hinter der Gießstation (23) von einer Längsbahn (21) auf eine Querbahn (26) übergeben werden.

9. Anlage nach Anspruch 6 bis 8,
dadurch gekennzeichnet, daß eine Wende- und Ausschlagstation (40) im Verlauf einer Querbahn (36) angeordnet ist.

10. Anlage nach einem der Ansprüche 6 bis 9,
dadurch gekennzeichnet, daß die Formen (12) an derjenigen Seite einer Längsbahn (21,28,32,37), an der eine Querbahn (26,29,35,36) anschließt, an einer in Transportrichtung verlaufenden Anschlagleiste (48) anliegen, während eine Transportkette (46) nur an der gegenüberliegenden Seite einer Längsbahn vorgesehen ist.

11. Anlage nach Anspruch 10,
dadurch gekennzeichnet, daß an der Transportkette (46) seitlich hervorstehende Anschläge (49) befestigt sind, die an der zur Transportrichtung prarallelen Seite einer Form (12) angreifen.

## Claims

1. An installation for the production of shaped chocolate articles, having individual working stations, such as a pouring, turning and cooling station, and a conveying path over which the moulds (12) for the chocolate articles can be passed lying one against the other through the working stations, characterized in that the moulds (12) lying one beside the other are used for guiding the cooling air, which flows along the conveying path in the cooling station.

2. An installation according to claim 1, characterized in that the cooling air is guided along both the underside and the top side of the moulds (12) in a direction parallel with the conveying direction.

3. An installation according to claims 1 or 2, characterized in that in the inlet zone and/or in the outlet zone of the cooling station (27, 31, 33, 34) the cooling air is deflected from the underside to the top side of the moulds (12) or in the converse direction.

4. An installation according to claim 3, characterized in that the cooling station (27, 31, 33, 34) has a casing (14) whose width is larger than the width of the moulds (12), the cooling air is deflected in corner zones (20) of the casing (14), and each zone extending between the corner zones (20) to one side of the conveying path is sealed between the moulds (12) and the casing (14).

5. An installation according to claims 3 or 4, characterized in that the cooling air is supplied at the underside of the moulds (12) at about half the length of the cooling station (27, 31, 33, 34) and is thence conducted along the underside of the moulds (12) in the direction of the inlet (10) or the outlet (11) of the cooler station, and at the inlet (10) and the outlet (11) respectively the cooling air is deflected to the top side of the moulds (12) and flows along said top side as far as the inlet (10) and outlet (11) respectively, where the cooling air is again deflected and returned along the underside of the moulds (12).

6. An installation according to one of the preceding claims, characterized in that the conveying path is subdivided into component paths which are disposed in the form of longitudinal paths (21, 28, 32, 37) and transverse paths (26, 29, 35, 36) extending at least approximately at right angles thereto.

7. An installation according to claim 6, characterized in that a cooling station (27, 31, 33, 34) is disposed in the course of each transverse path.

8. An installation according to claims 6 or 7, characterized in that downstream of the pouring station (23) the moulds (12) are transferred from a longitudinal path (21) to the transverse path (26).

9. An installation according to claims 6 to 8, characterized in that a turning and knocking-out station (40) is disposed in the course of one transverse path (36).

10. An installation according to one of claims 6 to 9, characterized in that on that side of a longitudinal path (21, 28, 32, 37) at which a transverse path (26, 29, 35, 36) adjoins, the moulds (12) bear against a stop strip (48) extending in the conveying direction, while a conveying chain (46) is provided only on the opposite side of a longitudinal path.

11. An installation according to claim 10, characterized in that attached to the conveying chain (46) are laterally projecting stops (49) which engage with that side of a mould (12) which is parallel with the conveying direction.

## Revendications

1. Installation pour la fabrication d'articles moulés en chocolat avec des stations individuelles de travail telles que des stations de coulée, de renversement et de refroidissement, et avec une voie de transport sur laquelle des moules (12) pour les articles en chocolat peuvent glisser adjacents les uns aux autres à travers les stations de travail, caractérisé en ce que les moules (12) adjacents les uns aux autres servent à la transmission de l'air de refroidissement qui s'écoule dans la station de refroidissement le long de la voie de transport.

2. Installation selon la revendication 1, caractérisée en ce que l'air de refroidissement est guidé suivant une direction parallèle à la direction de transport respectivement sur la face inférieure et la face supérieure des moules (12).

3. Installation selon la revendication 1 ou 2, caractérisée en ce que l'air de refroidissement est renversé dans la zone d'entrée et/ou dans la zone de sortie de la station de refroidissement (27, 31, 33, 34) de la face inférieure sur la face supérieure des moules (12) ou dans la direction opposée.

4. Installation selon la revendication 3, caractérisée en ce que la station de refroidissement (27, 31, 33, 34) présente un carter (14) dont la largeur est supérieure à la largeur des moules (12), que le renversement de l'air de refroidissement se produit dans des zones de coin (20) du carter (14) et que la zone s'étendant respectivement entre les zones de coin (20) d'un côté de la voie de transport est rendue étanche entre les moules (12) et le carter (14).

5. Installation selon la revendication 3 ou 4, caractérisée en ce que l'air de refroidissement est amené à environ mi-longueur de la station de refroidissement (27, 31, 33, 34) sur la face inférieure des moules (12) et de là est guidé sur la face inférieure des moules (12) suivant la direction de l'entrée (10) ou de la sortie (11) de la station de refroidissement, et qu'à l'entrée (10) ou respectivement à la sortie (11), l'air de refroidissement est renversé sur la face supérieure des moules (12) et s'écoule sur cette face jusqu'à l'entrée (10) ou respectivement la sortie (11), où se produit à nouveau un renversement et un retour de l'air de refroidissement sur la face inférieure des moules (12).

6. Installation selon l'une des revendications précédentes, caractérisée en ce que la voie de transport est divisée en voies partielles qui sont disposées comme voies longitudinales (21, 28, 32, 37) et voies transversales (26, 29, 35, 36) s'étendant au moins approximativement orthogonalement à celles-ci.

7. Installation selon la revendication 6, caractérisée en ce qu'une station de refroidissement (27, 31, 33, 34) est disposée respectivement sur le tracé de la voie transversale.

8. Installation selon la revendication 6 ou 7, caractérisée en ce que les moules (12) sont transmis derrière la station de coulée (23) d'une voie longitudinale (21) sur une voie transversale (26).

9. Installation selon la revendication 6 à 8, caractérisée en ce qu'une station de renversement et de garniture (40) est disposée sur le tracé d'une voie transversale (36).

10. Installation selon l'une des revendications 6 à 9, caractérisée en ce que les moules (12) sont adjacents à une barre d'arrêt (48) s'étendant en direction de transport sur le côté d'une voie longitudinale (21, 28, 32, 37) auquel se raccorde une voie transversale (26, 29, 35, 36), tandis qu'une chaîne transporteuse (46) n'est prévue que du côté opposé d'une voie longitudinale.

11. Installation selon la revendication 10, caractérisée en ce que des butées (49) saillant latéralement sont fixées à la chaîne de transport (46), qui saisissent un moule (12) sur le côté parallèle à la direction de transport.

_Fig.1_

EP 0 157 290 B1

## Fig. 2

EP 0 157 290 B1

Fig. 3

# Fig. 4

*Fig.5*

EP 0 157 290 B1